# EUROPEAN PATENT APPLICATION

(11) **EP 3 730 469 A1**
(43) Date of publication of application: **28.10.2020**
(21) Application number: 18855173.3
(22) Date of filing: 17.12.2018
(51) Int. Cl.: C04B 33/00, A47G 33/00, B28B 1/00, B44C 3/00, C04B 33/04, C04B 33/132, C04B 41/00

(54) **COMPOSITION COMPRISING CREMATION ASHES**

(30) Priority: 19.12.2017 ES 201731544 U
(71) Applicant: Narbon, S.L., 28005 Madrid (ES)
(72) Inventor: NARBÓN PRIETO, Gabriel, 28005 Madrid (ES); SÁNCHEZ-GUITARD LÓPEZ-VALERA, Francisco Ramón, 28005 Madrid (ES); TERUEL SAIZ, Antonio, 28005 Madrid (ES)
(74) Representative: Pons
(86) International application number: PCT/ES2018/070807
(87) International publication number: WO 2019/122478

(57) **Abstract**

The present invention relates to a composition that comprises clay and ashes originating from the cremation of dead persons, animals or vegetables and the purpose whereof is to create an emotional bond between the piece created with said composition and the user who acquires it.

## Description

The present invention relates to a composition that comprises clay and ashes originating from the cremation of dead persons, animals or vegetables and the purpose whereof is to create an emotional bond between the piece created with said composition and the user who acquires it.

### BACKGROUND OF THE INVENTION

Currently, there are different products designed for paying tribute and remembering deceased persons, as well as pets. These products are traditionally created using hair, teeth and other parts or tissues belonging to the deceased loved one.

Currently, cremation or incineration is one of the most habitual final destinations for corpses, which consists of burning the deceased, frequently at a place called crematorium or cremation furnace. A cremation furnace is an industrial furnace capable of reaching high temperatures (of approximately 870ºC to 980°C), with special modifications to ensure efficient disintegration of the body; the ashes are the result of the process. Cremation is slowly gaining ground over the practice of inhumation and, moreover, the final destination of the ashes is usually scattering, which makes it impossible to subsequently build a direct-contact emotional bond between the memory of the deceased and their bereaved.

### DESCRIPTION OF THE INVENTION

The present invention provides a composition characterised in that it comprises a mixture of at least one clay and ashes originating from the cremation of a deceased subject (person, animal or plant). The purpose of said composition is to manufacture an emotional object or permanent memorial.

Therefore, a first aspect of the present invention relates to an emotional composition characterised in that it comprises:
(a) clay; and
(b) ashes originating from the cremation of a deceased subject.

The gained advantage of using the composition of the present invention as compared to the rest of the compositions described in the prior art are its customisability and the homogeneous appearance of both the composition and the object formed with the composition, including by means of compression, as well as generating an emotional bond with the person who wears or owns said object.

In another preferred embodiment, the emotional composition is characterised in that the clay is selected from the list that comprises: white clay, calcareous earthenware paste, dolomite, feldspar, kaolinite, halloysite, illite, chlorite, vermiculite, montmorillonite, sepiolite-palygorskite and any combination thereof.

In a more preferred embodiment, the emotional composition is characterised in that the clay is white clay.

In another preferred embodiment, the emotional composition is characterised in that the weight percentage of the clay ranges between 90% and 95% by weight with respect to the final composition.

In another preferred embodiment, the emotional composition is characterised in that the weight percentage of the ashes ranges between 5% and 10% by weight with respect to the final composition.

In another preferred embodiment, the emotional composition is characterised in that this composition is baked, is in solid form and further comprises an outer layer (c) of glaze, wherein said outer layer of glaze is suitable for using the composition as a ceramic element or figure, or a three-dimensional figure or element obtained by means of 3D printing. This glaze is added in order for the pores generated during said baking process to be occluded with said glaze, which provides uniformity and rigidity to the final ceramic element or figure, or the three-dimensional figure or element obtained by means of 3D printing. This glaze is added following baking of the emotional composition in a conventional oven at a temperature ranging between 800ºC and 900ºC, and prior to a second baking in a conventional oven at a temperature ranging between 1000ºC and 1060ºC.

In a more preferred embodiment of the composition, wherein the layer of glaze is a resin selected from the following list: epoxy resin, photosensitive resin or any combination thereof.

In another preferred embodiment, the emotional composition is characterised in that the particle size of the clay with respect to the size of the ashes is such that it prevents large pores from being generated in the structure, which minimises the fragility of the ceramic object and achieves suitable compaction of the ceramic object containing the ashes, thereby preventing the lamination or breakage thereof.

Another aspect of the present invention relates to an element or figure that comprises a composition according to the description of the present invention.

Another aspect of the present invention relates to an element or figure that comprises a composition comprising an outer layer of glaze, preferably a resin selected from the following list: epoxy resin, photosensitive resin or any combination thereof, and which is mounted on a support.

A preferred embodiment of the present invention is the element or figure, wherein said element or figure is three-dimensional.

Another aspect of the present invention relates to the use of the composition described as ink for a 3D printer, in order to obtain a three-dimensional element or figure to produce an object the purpose whereof is to serve as a memorial of a deceased person, pet or living being. Preferably, the three-dimensional element or figure is a reliquary.

Another aspect of the present invention relates to the use of the composition described as a ceramic element or figure. Preferably, this element or figure is a reliquary.

A more preferred embodiment is the use of the already-glazed three-dimensional element or figure, or ceramic figure, mounted on the corresponding supports.

In the present invention, "emotional composition" is understood to mean any composition that comprises at least a certain percentage of ashes originating from the cremation of a corpse.

In the present invention, "subject" is understood to mean a human being, an animal or a vegetable.

In the present invention, "ashes" are understood to mean those ashes originating from the process of cremating a deceased person or a deceased animal, such as an animal companion or a pet, or even a vegetable.

In a preferred embodiment, the ashes are recovered at the end of the cremation process and are subsequently filtered and sieved to obtain sizes of less than 0.25 millimetres in diameter, in order to ensure homogeneity in the subsequent mixing of the final composition. This embodiment is suitable for obtaining the composition of the invention with the optimal particle sizes to be used as a 3D printer ink, since, with these particle sizes, the composition is optimised for extrusion at pressures of 4 bars from the pressurised chamber of a 3D printer.

In the present invention, "clay" is understood to mean any particle or fragment of a phyllosilicate or any other agglomerating mineral with a particle size of less than 0.002 millimetres.

In the present invention, "phyllosilicate" is understood to mean a sub-class of silicates, which includes minerals that are common in very diverse environments and have as a common feature a leafy (phyllon = leaf) or flaky habit arising from the existence of a perfect basal exfoliation. This is caused by the presence in its structure of infinite-dimensional tetrahedral layers in two directions of space. The chemical formula for these compounds always contains the (Si₂O₅²⁻)ₙ anion.

Throughout the description and the claims, the word "comprises" and variants thereof are not intended to exclude other technical characteristics, additives, components or steps. For persons skilled in the art, other objects, advantages and characteristics of the invention will arise, partly from the description and partly from the implementation of the invention. The following examples and figures are provided for illustrative purposes, and are not intended to limit the scope of the present invention.

### PREFERRED EMBODIMENT OF THE INVENTION

Below we provide a detailed description of a preferred embodiment of the object of the present invention.

Preparation of a figure made of clay and ashes obtained by means of 3D printing and subsequent glazing.

For the preparation, the ashes originating from the cremation of the remains of a deceased living being are recovered, and subsequently filtered and sieved in order to discard those particles with a diameter greater than 0.25 millimetres.

The selected particles are mixed with clays that have a particle size of less than 0.002 millimetres, until a homogeneous mixture is obtained, which is subsequently introduced inside a container equipped with a pressure system that exerts an overpressure of 4 bars on the materials contained inside.

The container comprises an outlet through which the mixture of materials is removed from the interior by means of the overpressure introduced, in order to feed said mixture of materials into a 3D printer equipped with at least one extruder nozzle.

The printer nozzle deposits a plurality of layers composed of the mixture of materials on an external substrate until the desired object, the design whereof has been previously introduced by means of a computer file, is shaped. In the preferred embodiment described herein, each of the successive layers has an approximate thickness of 1 millimetre and, finally, a rigid object with the selected design is obtained.

Once the printing is completed, the piece is allowed to dry for approximately 8-12 h.

When the piece is completely dry, the first baking is performed, which takes about 15 h; the maximum temperature reached in this first baking is 850°C.

Subsequently, the piece is glazed, with the aid of a paint brush, by coating the entire surface thereof, and a second baking is performed, wherein the glaze melts onto the surface of the object. This process takes 12 h and reaches a maximum temperature of 1030°C.

Finally, the already-glazed piece is mounted on the corresponding supports.

## Claims

1. Composition **characterised in that** it comprises:
(a) clay; and
(b) ashes originated from the cremation of a deceased subject.

2. Composition according to claim 1, wherein the clay is selected from the list that comprises: white clay, calcareous earthenware paste, dolomite, feldspar, kaolinite, halloysite, illite, chlorite, vermiculite, montmorillonite, sepiolite-palygorskite and any combination thereof.

3. Composition according to any of claims 1 or 2, wherein the clay is white clay.

4. Composition according to any of claims 1 to 3, wherein the ashes have a size of less than 0.25 mm in diameter.

5. Composition according to any of claims 1 to 4, wherein the weight percentage of the clay ranges between 90% and 95% with respect to the final composition.

6. Composition according to any of claims 1 to 5, wherein the weight percentage of the ashes ranges between 5% and 10% with respect to the final composition.

7. Composition according to any of compositions 1 to 6, wherein the ashes originated from a person or an animal.

8. Composition according to any of claims 1 to 7, wherein said composition is baked, is in solid form and further comprises an outer layer of glaze.

9. Composition according to claim 8, wherein the layer of glaze is a resin selected from the following list: epoxy resin, photosensitive resin or any combination thereof.

10. Element or figure that comprises a composition according to any of claims 1 to 9.

11. Element or figure that comprises a composition according to any of claims 8 or 9, and which is crimped on a support.

12. Element or figure according to any of claims 10 or 11, wherein the element or figure is three-dimensional.

13. Use of the composition according to any of claims 1 to 7, as ink for a 3D printer, in order to obtain a three-dimensional element or figure.

14. Use of the composition according to any of claims 1 to 9, as a ceramic element or figure.

15. Use according to any of claims 13 or 14, wherein the already-glazed three-dimensional element or figure, or ceramic figure, is crimped on the corresponding supports.
